# FASCICULE DE BREVET EUROPEEN

(11) **EP 4 127 415 B1**
(45) Date de publication et mention de la délivrance du brevet: **03.07.2024**
(21) Numéro de dépôt: 21716506.7
(22) Date de dépôt: 22.03.2021
(51) Int. Cl.: F01D 25/12, F01D 25/18, F02C 7/06, F16C 33/66

(54) **DISPOSITIF DE DISTRIBUTION D'HUILE D'UN PALIER A ROULEMENT DE TURBOMACHINE D'AERONEF**
VORRICHTUNG ZUR VERTEILUNG VON ÖL FÜR EINEN KUGELLAGER EINER FLUGZEUGTURBOMASCHINE
OIL DISTRIBUTION APPARATUS FOR A ROLLER BEARING OF AN AIRCRAFT TURBOMACHINE

(30) Priorité: 02.04.2020 FR 2003288
(43) Date de publication de la demande: 08.02.2023
(73) Titulaire: SAFRAN AIRCRAFT ENGINES, 75015 Paris (FR)
(72) Inventeur: PERDRIGEON, Christophe Marcel Lucien, 77550 MOISSY-CRAMAYEL (FR); DESOMBRE, Didier Gabriel Bertrand, 77550 MOISSY-CRAMAYEL (FR); SERVANT, Régis Eugène Henri, 77550 MOISSY-CRAMAYEL (FR)
(74) Mandataire: Gevers & Orès
(86) Numéro de dépôt international: PCT/FR2021/050464
(87) Numéro de publication internationale: WO 2021/198583

(56) Documents cités:
- FR-A1- 2 949 138
- FR-A1- 3 066 549
- FR-A1- 3 073 558
- US-A1- 2015 275 760

## Description

### Domaine technique de l'invention

La présente invention concerne un dispositif de distribution d'huile d'un palier à roulement pour une turbomachine d'aéronef.

### Aval-plan technique

L'état de l'art comprend notamment les documents FR-A1-2 949 138, FR-A1-3 035 154, FR-A1-3 066 549, FR-A1-3 073 558, US-A1-2015/275760 et WO-A1 -2015/075355.

De façon connue, une turbomachine comprend un certain nombre de paliers à roulement qui sont destinés à supporter en rotation le rotor de la turbomachine, notamment par rapport à un support fixe tel que le carter de celle-ci.

En fonctionnement, de l'huile est typiquement injectée sur les roulements de ces paliers de façon à les lubrifier et à les refroidir. Pour éviter que de l'huile ne se répande dans tout le moteur, il est nécessaire de confiner les paliers à roulement à l'intérieur d'enceintes à huile et d'assurer une étanchéité de ces enceintes à huile par rapport à des enceintes à air voisines du moteur qui doivent être exemptes d'huile.

Plus précisément, certaines enceintes à huile sont délimitées entre l'arbre supporté en rotation par le palier à roulement et un couvercle annulaire solidaire d'un support fixe lié au carter de turbomachine et disposé autour de l'arbre. Un joint annulaire dynamique est généralement positionné entre l'arbre et le couvercle pour assurer une étanchéité entre l'enceinte à huile et une enceinte à air voisine de cette dernière. Typiquement, le joint dynamique est monté à l'intérieur d'un flasque lui-même fixé sur le couvercle.

Les joints dynamiques typiquement utilisés dans les enceintes à huile de palier à roulement pour turbomachine sont des joints radiaux segmentés (JRS), comportant une pluralité de segments d'anneau répartis circonférentiellement autour d'une piste de joint tournant avec l'arbre du rotor. Ces segments sont en contact glissant avec la piste de joint. Les frottements entre les segments du joint et la piste de joint génèrent de la chaleur qu'il est nécessaire d'évacuer afin de conserver l'intégrité mécanique de ces éléments. Pour ce faire, une technique consiste à faire circuler de l'huile de refroidissement le long de la paroi interne de la piste de joint.

Le joint dynamique peut être situé juste à côté d'un palier à roulement qui est lubrifié par de l'huile en fonctionnement. Il est connu de lubrifier un palier à roulement par l'intermédiaire d'une bague de distribution d'huile. Le palier à roulement est monté sur la bague de distribution d'huile qui comprend une écope de récupération d'huile projetée par un gicleur, afin de récolter cette huile et alimenter un circuit de lubrification du palier.

La présente invention propose un perfectionnement à cette technologie qui permet notamment de garantir l'immobilisation, en particulier en rotation, de pièces les unes par rapport aux autres dans l'environnement restreint d'un dispositif de distribution d'huile.

### Résumé de l'invention

L'invention concerne un dispositif de distribution d'huile d'un palier à roulement pour une turbomachine d'aéronef, comportant :
- un palier à roulement comportant deux bagues, respectivement interne et externe,
- une bague de distribution d'huile configurée pour être montée sur un arbre de turbomachine, cette bague de distribution comportant :
   i) une surface cylindrique externe de montage de la bague interne du palier,
   ii) un épaulement annulaire d'appui d'une première extrémité axiale de la bague interne, et
   iii) une écope de récupération d'huile alimentant un circuit de lubrification dudit palier, - une piste annulaire d'un joint dynamique,
caractérisé en ce qu'il comprend en outre un écrou vissé sur un filetage de la bague de distribution et prenant appui axialement sur une seconde extrémité axiale de la bague interne pour la serrer axialement contre ledit épaulement, et en ce que ladite piste annulaire est configurée pour être en appui axial sur ladite bague de distribution et comprend des éléments de blocage en rotation coopérant avec des éléments complémentaires de l'écrou.

La bague interne du palier est ainsi serrée et immobilisée axialement entre l'épaulement de la bague de distribution et l'écrou vissé sur cette bague de distribution. Pour éviter un dévissage et un desserrage accidentel de l'écrou, celui-ci est bloqué en rotation par la piste du joint dynamique. Cette piste est en appui axial sur la bague de distribution et est donc située au voisinage immédiat de cette bague de distribution. La fonction de blocage en rotation de l'écrou de serrage de la bague est donc affectée à une pièce existante, à savoir la piste du joint dynamique. Cette fonction est donc assurée sans ajout de pièce ce qui est avantageux d'un point de vue coût, masse globale du dispositif et encombrement axial.

Le dispositif selon l'invention peut comprendre une ou plusieurs des caractéristiques suivantes, prises isolément les unes des autres, ou en combinaison les unes avec les autres :
- la bague de distribution comprend une surface cylindrique interne de frettage sur ledit arbre,
- ladite écope et ledit épaulement sont situés à une extrémité longitudinale de la bague de distribution opposée à ladite piste annulaire,
- la bague de distribution comprend un rebord annulaire interne de blocage axial de cette bague sur ledit arbre,
- la piste annulaire comprend un rebord annulaire interne d'appui axial sur ledit rebord annulaire de la bague,
- le rebord de la piste de joint comprend ou porte des pions axiaux engagés dans des encoches ou orifices du rebord de la bague et configurés pour être engagés dans des encoches ou orifices dudit arbre,
- les éléments de blocage sont formés par des doigts axiaux qui sont régulièrement répartis autour d'un axe du dispositif et sont engagés par crabotage dans des évidements complémentaires de l'écrou,
- la bague de distribution comprend une paroi cylindrique engagée axialement dans un espace annulaire de ladite piste annulaire et définissant dans cet espace un passage annulaire de circulation d'huile depuis ledit circuit vers des orifices de projection d'huile situés à la périphérie externe de ladite piste,
- ledit espace est formé dans une portion annulaire à section axiale en forme de U de ladite piste, cette portion annulaire comportant une surface cylindrique configurée pour coopérer avec ledit joint dynamique.

L'invention concerne en outre une turbomachine, en particulier d'aéronef, comportant un arbre sur lequel est monté au moins un dispositif tel que décrit ci-dessus, cet arbre comportant un filetage de vissage d'un écrou de serrage de ladite piste annulaire et de la bague de distribution contre un épaulement cylindrique de l'arbre.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une demi vue schématique partielle en coupe axiale d'une turbomachine comportant un dispositif de distribution d'huile selon un mode de réalisation de l'invention,
[Fig. 2] la figure 2 est une vue similaire à celle de la figure 1 et montrant le cheminement de l'huile dans le dispositif,
[Fig. 3] la figure 3 est une vue schématique partielle en perspective et en coupe axiale du dispositif de la figure 1,
[Fig. 4] la figure 4 est une vue à plus grande échelle d'une partie de la figure 3,
[Fig. 5] la figure 5 est une vue schématique en perspective d'un détail du dispositif de la figure 1,
[Fig. 6] la figure 6 est une vue schématique en perspective d'un détail du dispositif de la figure 1, et
[Fig. 7] la figure 7 est une vue similaire à celle de la figure 1 et montrant une variante de réalisation du dispositif selon l'invention.

### Description détaillée de l'invention

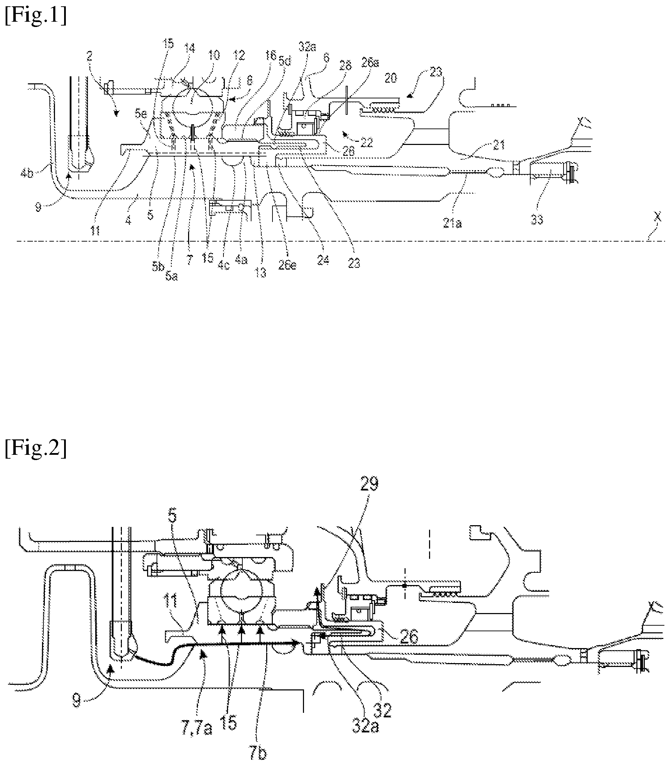

La figure 1 représente de façon schématique et partielle une enceinte à huile 2 d'un palier de turbomachine d'aéronef.

Cette enceinte à huile 2 est délimitée, du côté intérieur, par un arbre 4 tournant autour d'un axe X, et du côté extérieur par un couvercle annulaire 6 qui est solidaire d'un support fixe lié à un carter (non représenté) de la turbomachine et qui est disposé autour de l'arbre 4.

Une bague 5 de distribution d'huile est disposée autour de l'arbre 4 coaxialement à celui-ci, et est solidaire en rotation de celui-ci.

L'enceinte à huile 2 renferme un palier 8 comprenant une pluralité d'éléments roulants 10 engagés entre une bague interne 12 montée sur la bague de distribution 5, de préférence par frettage, et une bague externe 14 solidaire du carter de la turbomachine.

Dans l'exemple illustré sur les figures, les éléments roulants 10 sont des billes. Néanmoins, le type de roulement ou éléments roulants n'est pas limitatif dans le cadre de la présente invention.

De l'huile est injectée dans l'enceinte à huile 2 afin de lubrifier et de refroidir les éléments roulants 10 du palier. A cet effet, de l'huile circule dans un circuit de lubrification 7 aménagé entre la bague de distribution 5 et l'arbre 4. L'huile est apportée par un gicleur d'huile 9 qui est ici situé à l'amont de la bague de distribution 5 (les expressions « amont » et « aval » font ici référence à l'écoulement général des gaz dans la turbomachine). La bague 5 a une forme générale annulaire autour de l'axe X et comprend à son extrémité amont une écope 11 du type centrifuge de récupération de l'huile projetée par le gicleur 9. Cette écope se présente sous la forme d'un rebord cylindrique orienté vers l'amont dans l'exemple représenté. L'écope 11 s'étend autour et à distance de l'arbre 4 et définit avec celui-ci un espace annulaire de réception de l'huile du gicleur 9.

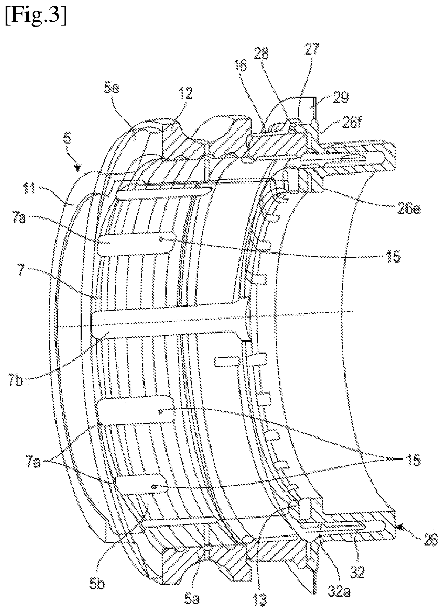

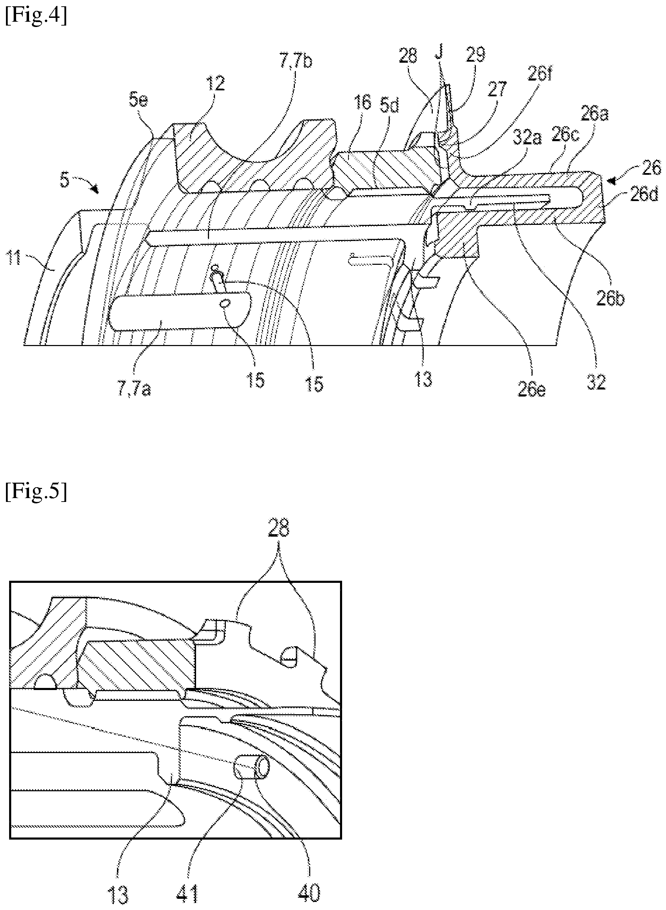

Le circuit d'huile 7 comprend des lunules 7a, 7b formées sur une surface cylindrique interne 5b de frettage de la bague de distribution 5 sur l'arbre 4. Les lunules 7a, 7b sont de deux types dans l'exemple représenté aux figures 3 et 4.

Les lunules 7a du premier type s'étendent sur une partie de l'étendue longitudinale de la surface 5b et débouchent à leurs extrémités amont sur l'extrémité amont de la bague 5, radialement à l'intérieur de l'écope 11. Leurs extrémités aval sont reliées aux extrémités radialement internes de conduits 15 orientés sensiblement radialement par rapport à l'axe X et débouchant par leurs extrémités radialement externes sur la surface 5a de la bague 5 sur laquelle est montée la bague 12 du palier 8.

Les lunules 7b du second type s'étendent sur toute l'étendue longitudinale de la surface 5b et débouchent à leurs extrémités amont sur l'extrémité amont de la bague 5, radialement à l'intérieur de l'écope 11. Leurs extrémités aval débouchent sur l'extrémité aval de la bague 5, radialement à l'intérieur d'un déflecteur annulaire d'huile 32 prévu sur la bague 5.

Dans l'exemple représenté, on constate que le gicleur 9 est disposé en aval d'une épingle 4b formée d'une seule pièce avec l'arbre 4, et en amont du palier 8.

Pour autoriser le montage par frettage de la bague 5 sur l'arbre 4 depuis l'aval (cela ne serait pas possible depuis l'amont du fait de la présence de l'épingle 4), l'écope 11 a de préférence un diamètre interne minimal supérieur au diamètre interne minimal de la surface 5b. Le diamètre minimal de l'écope 11 peut être défini par un rebord annulaire interne prévu à l'extrémité libre amont de celle-ci.

La bague 5 comprend ainsi un déflecteur 32 qui se présente sous la forme d'une paroi cylindrique centrée sur l'axe X. Dans l'exemple représenté, cette paroi a une épaisseur radiale fine et en particulier inférieure à l'épaisseur radiale minimale du reste de la bague 5, y compris de l'écope 11. Ce déflecteur 32 peut comprendre sur sa surface cylindrique interne une nervure annulaire interne 32a en saillie.

A son extrémité aval, la bague 5 comprend également un rebord annulaire radialement interne 13 qui est en appui axial vers l'amont contre un épaulement cylindrique 4a de l'arbre 4. Une gorge annulaire 4c est située juste en amont de cet épaulement 4a et permet un guidage optimal de l'effort dans l'arbre 4 lors du passage de couple entre l'arbre 4 et la bague de distribution 5 frettée sur l'arbre.

La bague interne 12 est en appui axial vers l'amont sur un épaulement annulaire 5e de la bague 5. En aval de la surface 5a de montage de la bague interne 12, la bague de distribution 5 comprend un filetage externe 5d de vissage d'un écrou 16 qui prend appui axialement sur l'extrémité aval de la bague 12 afin de la serrer axialement contre l'épaulement 5e.

L'enceinte à huile 2 comprend en outre un système d'étanchéité destiné à assurer une étanchéité de cette enceinte à huile par rapport à une enceinte à air 20 voisine qui doit être exempte d'huile.

A cet effet, le système d'étanchéité comprend notamment un joint annulaire dynamique 22. Typiquement, ce joint dynamique 22 est composé de segments d'anneau en carbone. Le joint dynamique 22 est maintenu dans un flasque annulaire 28 lui-même monté à l'intérieur du couvercle 6.

Le flasque 28 présente une partie de section en forme de L qui reçoit le joint dynamique 22.

Le joint annulaire dynamique 22 est associé à une piste de joint 26, qui est tournante et portée par l'arbre 4. La piste 26 comporte une surface de contact 26a, en contact glissant avec le joint annulaire dynamique 22. La surface de contact 26a et la piste 26 sont traités pour améliorer le glissement joint/piste et minimiser l'usure du joint annulaire dynamique 22.

La piste de joint 26 a une forme générale annulaire autour de l'axe X et a en section axiale une forme générale en U ou C qui définit un espace annulaire orienté axialement, ici vers l'amont, c'est-à-dire en direction de la bague de distribution 5.

Comme cela est visible à la figure 4, la piste de joint 26 comprend ainsi deux parois annulaires, respectivement interne 26b et externe 26c, coaxiales et s'étendant l'une à l'intérieur de l'autre. La paroi 26c comprend la surface cylindrique 26a de support et de glissement du joint dynamique 22.

Les extrémités aval des parois 26b, 26c sont reliées par une paroi annulaire médiane 26d orientée sensiblement radialement par rapport à l'axe X. Chacune des extrémités amont des parois 26b, 26c comprend un rebord annulaire 26e, 26f orienté également radialement.

Le rebord 26e s'étend radialement vers l'intérieur et en regard et en aval du rebord 13 de la bague de distribution 5. Il est destiné à être serré axialement contre ce rebord 13.

Le rebord 26f s'étend radialement vers l'extérieur et en aval de l'écrou 16. Il a une double fonction dans l'exemple représenté. Il est d'une part équipé d'une rangée annulaire de doigts 27 orientés axialement vers l'amont et engagés entre des dents de crabot 28 ou des éléments analogues de l'écrou 16. Cet engagement assure le blocage en rotation de l'écrou 16 par rapport à la piste de joint 26 et donc par rapport à la bague 5 et à l'arbre 4.

Le rebord 26f est également équipé d'un prolongement annulaire 29 radialement vers l'extérieur qui forme un lance goutte, c'est-à-dire un élément de guidage et de projection de gouttes d'huile par centrifugation en fonctionnement.

L'espace annulaire défini par la piste de joint 26 reçoit le déflecteur 32 de la bague de distribution 5 qui est engagé axialement depuis l'amont dans cet espace. En position de montage représentée dans les dessins, le déflecteur 32 est écarté radialement des parois 26b, 26c d'une distance prédéterminée et sensiblement constante. Le déflecteur 32 est en outre écarté axialement de la paroi 26d.

Le déflecteur 32 définit à l'intérieur de cet espace un passage annulaire à section en U de circulation d'huile depuis les sorties ou extrémités aval des lunules 7b jusqu'à un jeu axial J prévu entre l'écrou 16 et la piste de joint 26, au niveau des dents de crabot 28 et des doigts 27 (figure 4). Du fait de la présence de ce jeu J, les dents de crabot 28 et les doigts 27 définissent entre eux des orifices de passage d'huile en direction radiale.

Le système d'étanchéité 22 comporte également un joint labyrinthe 23 disposé en aval du joint dynamique 22, entre un tourillon 21 monté sur l'arbre 4 et le couvercle 6 (figure 1).

Le tourillon 21 est solidarisé en rotation avec l'arbre 4 par l'intermédiaire de cannelures 21a. Le tourillon 21 est situé en aval de la bague de distribution 5 et de la piste de joint 26 et comprend une extrémité amont en appui axial contre le rebord 26e de la piste de joint 26 ou un anneau 24 intercalé entre cette extrémité amont et le rebord 26e (figure 1).

Un écrou 33 est vissé sur l'arbre 4, en aval du tourillon 21, et est destiné à prendre appui axialement vers l'amont pour serrer axialement les rebords 13 et 26e entre l'épaulement 4a et le tourillon 21. Par ailleurs, la bague 5 est de préférence frettée sur l'arbre 4 pour garantir son centrage comme évoqué dans ce qui précède.

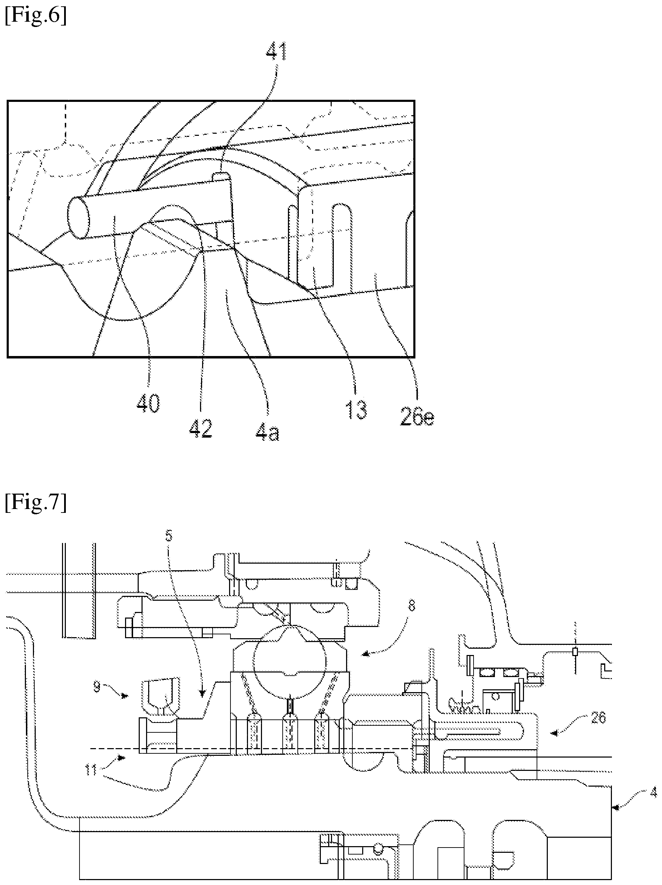

Comme cela est visible aux figures 5 et 6, le rebord 26e de la piste de joint 26 porte des pions axiaux 40 qui sont engagés dans des encoches ou des orifices 41 du rebord 13 de la bague 5 ainsi que dans des encoches 42 ou orifices de l'épaulement 4a de l'arbre 4. Cette coopération permet d'immobiliser en rotation la piste de joint 26 par rapport à la bague 5 et à l'arbre 4. On comprend ainsi que l'écrou 16, qui est immobilisé en rotation par rapport à la piste de joint 26, l'est également par rapport à la bague 5 et à l'arbre 4.

Dans l'exemple représenté, les pions 40 sont rapportés et fixés par frettage dans des trous borgnes du rebord 26e de la piste de joint 26.

La figure 2 représente de manière schématique par des flèches le cheminement de l'huile en fonctionnement. L'huile est projetée par le gicleur 9 dans l'espace délimité par l'écope 11 et pénètre dans le circuit 7. De l'huile est acheminée jusqu'au palier 8 par les conduits 15 en vue de sa lubrification, et jusque dans le passage défini entre le déflecteur 32 et la piste de joint 26. L'huile circule dans ce passage pour refroidir par conduction la piste de joint 26, puis est évacuée à travers le jeu J précité pour être projetée par centrifugation par le lance goutte formé par le prolongement 29.

La variante de réalisation du dispositif représenté à la figure 7 diffère du précédent mode de réalisation essentiellement en ce que l'écope 11 du type centrifuge est ici remplacée par une écope 11' du type centripète.

Le dispositif selon l'invention permet notamment d'assurer un blocage en rotation de l'écrou 16 d'immobilisation axiale du palier 8, et ceci dans un encombrement axial et radial optimisé. Elle permet en outre d'assurer un refroidissement optimal de la piste de joint 26, dans cet environnement restreint.

## Revendications

1. Dispositif de distribution d'huile d'un palier à roulement (8) pour une turbomachine d'aéronef, comportant :
- un palier à roulement (8) comportant deux bagues, respectivement interne (12) et externe (14),
- une bague (5) de distribution d'huile configurée pour être montée sur un arbre (4) de turbomachine, cette bague de distribution comportant :
i) une surface cylindrique externe (5a) de montage de la bague interne du palier,
ii) un épaulement annulaire (5e) d'appui d'une première extrémité axiale de la bague interne, et
iii) une écope (11) de récupération d'huile alimentant un circuit (7) de lubrification dudit palier,
- une piste annulaire (26) d'un joint dynamique (22),
**caractérisé en ce qu'**il comprend en outre un écrou (16) vissé sur un filetage (5d) de la bague de distribution et prenant appui axialement sur une seconde extrémité axiale de la bague interne pour la serrer axialement contre ledit épaulement, et **en ce que** ladite piste annulaire (26) est configurée pour être en appui axial sur ladite bague de distribution et comprend des éléments de blocage (27) en rotation coopérant avec des éléments (28) complémentaires de l'écrou.

2. Dispositif selon la revendication 1, dans lequel la bague de distribution (5) comprend une surface cylindrique interne (5b) de frettage sur ledit arbre (4).

3. Dispositif selon la revendication 1 ou 2, dans lequel ladite écope (11) et ledit épaulement (5e) sont situés à une extrémité longitudinale de la bague de distribution (5) opposée à ladite piste annulaire (26).

4. Dispositif selon l'une des revendications précédentes, dans lequel la bague de distribution (5) comprend un rebord annulaire interne (13) de blocage axial de cette bague sur ledit arbre (4).

5. Dispositif selon la revendication 4, dans lequel la piste annulaire (26) comprend un rebord annulaire interne (26e) d'appui axial sur ledit rebord annulaire (13) de la bague (5).

6. Dispositif selon la revendication 5, dans lequel le rebord (26e) de la piste de joint (26) comprend ou porte des pions axiaux (40) engagés dans des encoches ou orifices (41) du rebord (13) de la bague (5) et configurés pour être engagés dans des encoches (42) ou orifices dudit arbre (4).

7. Dispositif selon l'une des revendications précédentes, dans lequel les éléments de blocage sont formés par des doigts axiaux (27) qui sont régulièrement répartis autour d'un axe (X) du dispositif et sont engagés par crabotage dans des évidements complémentaires de l'écrou (16).

8. Dispositif selon l'une des revendications précédentes, dans lequel la bague de distribution (5) comprend une paroi cylindrique engagée axialement dans un espace annulaire de ladite piste annulaire (26) et définissant dans cet espace un passage annulaire de circulation d'huile depuis ledit circuit (7) vers des orifices de projection d'huile situés à la périphérie externe de ladite piste.

9. Dispositif selon la revendication 8, dans lequel ledit espace est formé dans une portion annulaire à section axiale en forme de U de ladite piste (26), cette portion annulaire comportant une surface cylindrique (26a) configurée pour coopérer avec ledit joint dynamique (22).

10. Turbomachine d'aéronef, comportant un arbre (4) sur lequel est monté au moins un dispositif selon l'une des revendications précédentes, cet arbre comportant un filetage de vissage d'un écrou (33) de serrage de ladite piste annulaire (26) et de la bague de distribution (5) contre un épaulement cylindrique (4a) de l'arbre.

## Patentansprüche

1. Vorrichtung zum Verteilung von Öl aus einem Kugellager (8) für ein Turbotriebwerk eines Luftfahrzeugs, umfassend:
- ein Kugellager (8), das zwei Ringe, jeweils einen inneren (12) und einen äußeren (14), aufweist,
- einen Ölverteilungsring (5), der dazu konfiguriert ist, auf einer Welle (4) eines Turbotriebwerks montiert zu werden, wobei dieser Verteilungsring umfasst:
i) eine zylindrische äußere Oberfläche (5a) zur Montage des Innenrings des Lagers,
ii) eine ringförmige Schulter (5e) zur Auflage eines ersten axialen Endes des Innenrings, und
iii) einen Schöpfer (11) zum Auffangen von Öl, das einen Schmierkreislauf (7) des Lagers versorgt,
- eine ringförmige Bahn (26) einer dynamischen Dichtung (22),
**dadurch gekennzeichnet, dass** sie weiter eine Mutter (16) umfasst, die auf ein Gewinde (5d) des Verteilungsrings geschraubt ist und sich axial an einem zweiten axialen Ende des Innenrings abstützt, um ihn axial gegen die Schulter zu klemmen, und dass die ringförmige Bahn (26) dazu konfiguriert ist, axial an dem Verteilungsring aufzuliegen, und Drehblockierungselemente (27) umfasst, die mit komplementären Elementen (28) der Mutter zusammenwirken.

2. Vorrichtung nach Anspruch 1, wobei der Verteilungsring (5) eine zylindrische innere Oberfläche (5b) zum Frettieren auf die Welle (4) umfasst.

3. Vorrichtung nach Anspruch 1 oder 2, wobei der Schöpfer (11) und die Schulter (5e) an einem länglichen Ende des Verteilungsrings (5) gegenüber der ringförmigen Bahn (26) angeordnet sind.

4. Vorrichtung nach einem der vorstehenden Ansprüche, wobei der Verteilungsring (5) einen inneren, ringförmigen Flansch (13) zur axialen Blockierung dieses Rings auf der Welle (4) umfasst.

5. Vorrichtung nach Anspruch 4, wobei die ringförmige Bahn (26) einen inneren, ringförmigen Flansch (26e) zur axialen Auflage auf den ringförmigen Flansch (13) des Rings (5) umfasst.

6. Vorrichtung nach Anspruch 5, wobei der Rand (26e) der Dichtungsbahn (26) axiale Stifte (40) umfasst oder trägt, die in Kerben oder Öffnungen (41) des Randes (13) des Rings (5) eingreifen und dazu konfiguriert sind, in Kerben (42) oder Öffnungen der Welle (4) einzugreifen.

7. Vorrichtung nach einem der vorstehenden Ansprüche, wobei die Blockierelemente durch axiale Finger (27) ausgebildet sind, die regelmäßig um eine Achse (X) der Vorrichtung verteilt sind und in komplementäre Ausnehmungen der Mutter (16) durch Klauenkupplung eingreifen.

8. Vorrichtung nach einem der vorstehenden Ansprüche, wobei der Verteilungsring (5) eine zylindrische Wand umfasst, die axial in einen ringförmigen Raum der ringförmigen Bahn (26) eingreift und in diesem Raum einen ringförmigen Durchgang für die Zirkulation von Öl von dem Kreislauf (7) zu Ölaufspritzöffnungen definiert, die sich am äußeren Umfang der Bahn befinden.

9. Vorrichtung nach Anspruch 8, wobei der Raum in einem ringförmigen Abschnitt mit U-förmigem Axialschnitt der Bahn (26) ausgebildet ist, wobei der ringförmige Abschnitt eine zylindrische Oberfläche (26a) aufweist, die dazu konfiguriert ist, mit der dynamischen Dichtung (22) zusammenzuwirken.

10. Turbotriebwerk eines Luftfahrzeugs, das eine Welle (4) aufweist, auf der mindestens eine Vorrichtung nach einem der vorstehenden Ansprüche montiert ist, wobei diese Welle ein Gewinde zum Aufschrauben einer Mutter (33) zum Festklemmen der ringförmigen Bahn (26) und des Verteilungsrings (5) gegen eine zylindrische Schulter (4a) der Welle aufweist.

## Claims

1. A device for distributing oil from a rolling bearing (8) for an aircraft turbine engine, comprising:
- a rolling bearing (8) comprising two rings, internal (12) and external (14) respectively,
- an oil distribution ring (5) configured to be mounted on a turbine engine shaft (4), this distribution ring comprising:
i) an external cylindrical surface (5a) for mounting the internal ring of the bearing,
ii) an annular shoulder (5e) for supporting a first axial end of the internal ring, and
iii) an oil recovery scoop (11) feeding a lubrication circuit (7) of said bearing,
- an annular track (26) of a dynamic joint (22),
**characterised in that** it further comprises a nut (16) screwed onto a thread (5d) of the distribution ring and being supported axially on a second axial end of the internal ring in order to tighten it axially against said shoulder, and **in that** said annular track (26) is configured so as to be in axial support on said distribution ring and comprises rotation-locking elements (27) cooperating with complementary elements (28) of the nut.

2. The device according to claim 1, wherein the distribution ring (5) comprises an internal cylindrical surface (5b) for shrink-fitting onto said shaft (4).

3. The device according to claim 1 or 2, wherein said scoop (11) and said shoulder (5e) are located at a longitudinal end of the distribution ring (5) opposite said annular track (26).

4. The device according to one of the preceding claims, wherein the distribution ring (5) comprises an internal annular rim (13) for axially locking this ring on said shaft (4).

5. The device according to claim 4, wherein the annular track (26) comprises an internal annular rim (26e) being supported axially on said annular rim (13) of the ring (5).

6. The device according to claim 5, wherein the rim (26e) of the joint track (26) comprises or carries axial pins (40) engaged in notches or orifices (41) of the rim (13) of the ring (5) and configured to be engaged in notches (42) or orifices of said shaft (4).

7. The device according to one of the preceding claims, wherein the locking elements are formed by axial fingers (27) which are regularly distributed around an axis (X) of the device and are engaged by dog clutch into complementary recesses of the nut (16).

8. The device according to one of the preceding claims, wherein the distribution ring (5) comprises a cylindrical wall axially engaged in an annular space of said annular track (26) and defining in this space an annular passage for the circulation of oil from said circuit (7) towards oil projection orifices located at the external periphery of said track.

9. The device according to claim 8, wherein said space is formed in an annular segment of U-shaped axial cross-section of said track (26), this annular segment comprising a cylindrical surface (26a) configured to cooperate with said dynamic joint (22).

10. An aircraft turbine engine, comprising a shaft (4) on which is mounted at least one device according to one of the preceding claims, this shaft comprising a thread for screwing a nut (33) for tightening said annular track (26) and the distribution ring (5) against a cylindrical shoulder (4a) of the shaft.
